# EUROPEAN PATENT APPLICATION

(11) **EP 4 679 655 A1**
(43) Date of publication of application: **14.01.2026**
(21) Application number: 24197299.1
(22) Date of filing: 29.08.2024
(51) Int. Cl.: H02J 1/00

(54) **OUTDOOR ELECTRICAL SYSTEM AND METHOD BASED ON PROGRAMMABLE POWER SUPPLY**

(30) Priority: 10.07.2024 CN 202410919243
(71) Applicant: FuturePulse Investment Co., Ltd., Guangzhou Guangdong 510507 (CN)
(72) Inventor: Li, Wenjie, Guangzhou, Guangdong, 510507 (CN)
(74) Representative: Petraz, Gilberto Luigi

(57) **Abstract**

The present invention discloses an outdoor electrical system and method based on a programmable power supply, pertaining to the field of outdoor electrical appliance, wherein the programmable power supply receives a data request signal from an outdoor electrical appliance, dynamically adjusts the output voltage based on the data request data, and then outputs it to the outdoor electrical appliance; when the output power of the outdoor electrical appliance is greater than a preset threshold, the power supply output is directly output to the electrical load through a set programming and protection detection module, and when the output power is less than the preset threshold, the power supply output is adjusted through a set low power conversion module before being output to the electrical load, which achieves that the energy conversion is completed in one step within the programmable power supply, without the need for a DC-DC conversion circuit in between, effectively reducing the number of energy conversions on the power consumption side, achieving the effect of reducing energy conversion loss, and enhancing the output conversion efficiency of the outdoor electrical system.

## Description

### TECHNICAL FIELD

The present invention pertains to the field of outdoor electrical appliances, and specifically relates to an outdoor electrical system and method based on a programmable power supply.

### BACKGROUND

Outdoor electrical systems, as key support equipment for modern outdoor activities, are gradually evolving from simple power supply to intelligence, efficiency, and multi-function. With the growing enthusiasm for outdoor exploration, camping, field operations, and other activities, the application scenarios of outdoor electrical systems are becoming more extensive, and the performance and technical requirements are also increasing day by day.

In recent years, the emergence of Programmable Power Supply (PPS) technology has brought revolutionary changes to outdoor electrical systems. PPS is a power source that uses the USB PD protocol to output and adjusts voltage and current, capable of exchanging data with the electrical appliance. Therefore, according to the conditions set by outdoor electrical appliances, PPS can dynamically adjust the output voltage and current step by step, and the outdoor electrical appliances can request these changes based on their own load.

Most of the existing outdoor electrical appliances of the outdoor electrical systems use DC-DC conversion circuits as driving force. By controlling the output voltage and current of the DC-DC conversion circuit, the power of the outdoor electrical appliances is controlled. However, the existing DC-DC conversion circuits usually require switching unit to achieve voltage boosting or reducing, which involves switching operations. During the switching operation, there are conduction losses and switching losses. These are caused by the changes in current and voltage when the switching unit transition from on to off and from off to on, resulting in energy loss. This leads to an increase in the overall conversion loss of the circuit, resulting in high power loss. Therefore, how to achieve an outdoor electrical system based on programmable power supply with low conversion loss has become an urgent problem to be solved.

### SUMMARY

To overcome the problem of high power loss during power conversion through DC-DC conversion circuits in existing technologies, the present invention proposes an outdoor electrical system and method based on a programmable power supply. This system does not rely on DC-DC conversion circuits for power conversion, thereby effectively reducing the power conversion loss and improving the power conversion efficiency of the outdoor electrical system.

To achieve the foregoing objectives, the technical solutions of the present invention is as follow:
an outdoor electrical system based on a programmable power supply includes:
a programmable power supply, configured to receive a data request signal from an outdoor electrical appliance, adjust an output power of the power supply according to the data request signal, and output the output power to the outdoor electrical appliance; and
the outdoor electrical appliance, configured to convert a sampling circuit signal of an electrical load into a data request signal and transmit the data request signal to the programmable power supply. When the output power is greater than a set threshold, a built-in programming and protection detection module directly outputs the power supply to the electrical load, and when the output power is less than the set threshold, a built-in low power conversion module adjusts the power supply and outputs the power supply to the electrical load.

Preferably, the programmable power supply is bidirectionally connected to the outdoor electrical appliance through a physical connection cable, and the programmable power supply is powered by a power supply of programmable type that supports a PD communication protocol.

Preferably, the physical connection cable is a USB cable, compatible with the protocol between the programmable power supply and the outdoor electrical appliance.

Preferably, the outdoor electrical appliance includes a protocol interface module and a microcontroller. The programmable power supply is bidirectionally connected to the protocol interface module, the protocol interface module is bidirectionally connected to the programming and protection detection module and the low power conversion module, the microcontroller is bidirectionally connected to the programming and protection detection module, the protocol interface module, the low power conversion module, and the electrical load, and the programming and protection detection module and the low power conversion module are respectively electrically connected to the electrical load.

Preferably, the protocol interface module equips a PD communication protocol converter, which is used to convert the sampling circuit signal into a PD protocol message readable by the programmable power supply, and the PD protocol messages are referred to as the data request signal.

Preferably, the programming and protection detection module includes a sampling circuit for obtaining the sampling circuit signal, a load protection switch and a fuse. The sampling circuit is connected to one end of the load protection switch, the other end of the load protection switch is connected to one end of the fuse, and the other end of the fuse is connected to the electrical load.

Preferably, the sampling circuit signal include a voltage signal and a current signal.

Preferably, the process of converting the sampling circuit signal into the data request signal includes:
The sampling circuit samples the circuit through the electrical load to obtain the voltage signal and current signal, calculates an error value between these signals and preset target parameters in the microcontroller, obtains an error value result, and the microcontroller outputs a control adjustment signal to the protocol interface module based on the error value result. The protocol interface module uses the PD communication protocol converter to convert the control adjustment signal into a PD protocol message readable by the programmable power supply, using the PD protocol message as the data request signal to be transmitted to the programmable power supply via the physical connection cable. The programmable power supply receives the data request signal and outputs a target voltage and current to the outdoor electrical appliance.

Preferably, an impedance parameter of the electrical load is a set value, thereby achieving impedance matching between the outdoor electrical appliance and the programmable power supply.

The present invention also proposes an outdoor electrical method based on a programmable power supply, which includes the following steps:
step 1, sampling circuit of an electrical load to generate a sampling circuit signal, and converting the sampling circuit signal into a data request signal to be transmitted to the programmable power supply;
step 2, receiving the data request signal via the programmable power supply, dynamically adjusts the voltage and current levels based on the data request signal,, and outputting a target voltage and a target current to the outdoor electrical appliance; and
step 3, calculating an output power based on the target voltage and the target current via the outdoor electrical appliance. When the output power is greater than a set threshold, directly transmitting the target voltage and the target current to the electrical load. When the output power is less than the set threshold, adjusting the target voltage and the target current and then outputting the target voltage and the target current to the electrical load.

Compared with the prior art, the present invention has the following beneficial effects:
The present invention proposes an outdoor electrical system and method based on a programmable power supply. When the output power from the programmable power supply to the electrical load is greater than a preset threshold, it is determined that the electrical load requires high power consumption, and the power supply output is directly output to the electrical load through a set programming and protection detection module, thereby reducing power conversion loss, and when the output power is less than the preset threshold, it is determined that the electrical load requires low power consumption, and the power supply output is adjusted through a set low power conversion module before being output to the electrical load. This approach ensures that when high power output is needed, the energy conversion is completed in one step within the programmable power supply, without the need for a DC-DC conversion circuit in between, effectively reducing the number of energy conversions on the power consumption side, achieving the effect of reducing energy conversion loss, and enhancing the output conversion efficiency of the outdoor electrical system.

### BRIEF DESCRIPTION OF DRAWINGS

FIG.1 is a schematic diagram of an outdoor electrical system based on a programmable power supply according to an embodiment of the present invention.
FIG.2 is a schematic diagram of a programming and protection detection module according to an embodiment of the present invention.
FIG.3 is a circuit schematic diagram of a current limiting control according to an embodiment of the present invention.
FIG.4 is an operating principle diagram of a charge pump according to an embodiment of the present invention.
FIG.5 is a schematic diagram of an outdoor electrical method based on a programmable power supply according to an embodiment of the present invention.
Wherein,
1. programmable power supply; 2. outdoor electrical appliance; 21. electrical load; 22. programming and protection detection module; 221. sampling circuit; 222. load protection switch; 223. fuse; 23. low power conversion module; 24. protocol interface module; 25. microcontroller; 26. PD communication protocol converter; 3. charge pump; 4. LED.

### DETAILED DESCRIPTION OF EMBODIMENTS

The drawings are for illustrative purposes only and should not be considered as any limitation of the present invention.

For those skilled in the art, it is understandable that certain well-known content in the drawings may be omitted.

The technical solution of the present invention is further described below in conjunction with the drawings and embodiments.

### Embodiment 1

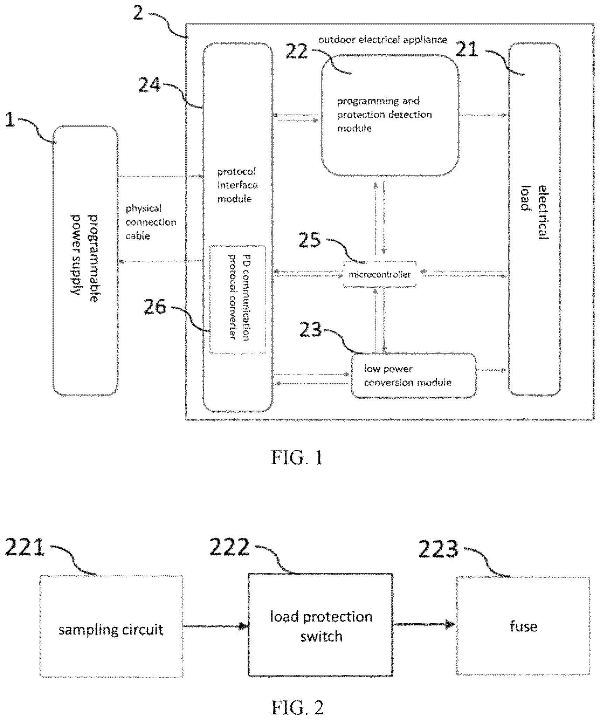

As shown in FIG. 1, this embodiment provides an outdoor electrical system based on a programmable power supply, including
a programmable power supply 1 configured to to receive a data request signal from an outdoor electrical appliance 2, adjust an output power of the power supply based on the data request signal, and output the output power to the outdoor electrical appliance 2.

The programmable power supply 1 is bidirectionally connected to the outdoor electrical appliance 2 through a physical connection cable, and the programmable power supply 1 is powered by a power supply of a type that supports a PD communication protocol.

The physical connection cable is a USB cable which specifically includes a Type-C cable and a two-pin plug which are interconnected. The physical connection cable is compatible with a protocol between the programmable power supply 1 and the outdoor electrical appliance 2. The physical connection cable, as a physical means to connect the programmable power supply 1 and the outdoor electrical appliance 2, is capable of carrying electrical energy between the two items and providing bidirectional communication for protocol adaption, handshake protocol, and receiving and responding the signal of the outdoor electrical appliance 2 to output corresponding protocol voltage and current.

The outdoor electrical appliance 2 is configured to convert a sampling circuit signal of an electrical load 21 into the data request signal and transmit the later one to the programmable power supply 1. When the output power is greater than a set threshold, a built-in programming and protection detection module 22 directly outputs the power supply to the electrical load 21, and when the output power is less than the set threshold, a built-in low power conversion module 23 adjusts the power supply and outputs it to the electrical load 21.

The outdoor electrical appliance 2 includes a protocol interface module 24 and a microcontroller 25. The programmable power supply 1 is bidirectionally connected to the protocol interface module 24, the protocol interface module 24 is bidirectionally connected to the programming and protection detection module 22 and the low power conversion module 23, wherein the connection cable between the protocol interface module 24 and the programming and protection detection module 22 is a high-power channel, and the connection cable between the protocol interface module 24 and the low power conversion module 23 is a low-power channel. The microcontroller 25 is bidirectionally connected to the programming and protection detection module 22, the protocol interface module 24, the low power conversion module 23, and the electrical load 21 respectively, and the programming and protection detection module 22 and the low power conversion module 21 are respectively electrically connected to the electrical load 21, wherein the electrical load 21 within the outdoor electrical appliance 2 is actually an internal battery.

In this embodiment, when the output power from the programmable power supply 1 to the electrical load 21 is greater than a preset threshold, it is determined that the electrical load 21 requires high power consumption, and the power supply output is directly output to the electrical load 21 through a set programming and protection detection module 22, thereby reducing power conversion loss, and when the output power is less than the preset threshold, it is determined that the electrical load 21 requires low power consumption, and the power supply output is adjusted through a set low power conversion module 23 before being output to the electrical load 21. This approach ensures that when high power output is needed, the energy conversion is completed in one step within the programmable power supply 1, without the need for a DC-DC conversion circuit in between, effectively reducing the number of energy conversions on the power consumption side, achieving the effect of reducing energy conversion loss, and enhancing the efficiency of the outdoor electrical system's output conversion.

It is also specifically stated that the power directly supplies power to the electrical load 21 by using the programmable power supply 1 when the electrical load 21 requires a high-power consumption, avoiding an integration of a large volume DC-DC buck-boost conversion module in the high-power outdoor electrical appliance 2 which is beneficial for reducing the volume of the outdoor electrical appliance 2, lowering manufacturing costs, reducing power conversion loss, and completing all energy conversions in one step within the programmable power supply 1, without DC-DC conversion, which effectively reducing the number of energy conversions on the power consumption side. When the electrical load 21 requires a low-power consumption, that is, in scenarios requiring fine adjustment and rapid response, the voltage of the power supply output is finely adjusted by a low-power DC-DC chip, achieving precise constant temperature, insulation, constant speed, constant pressure and other targeted functions of the outdoor electrical appliance 2.

### Embodiment 2

As shown in FIG. 1, the protocol interface module 24 is equipped with a PD communication protocol converter 26, which is configured to convert the sampling circuit signal into a PD protocol message readable by the programmable power supply 1, denoting the PD protocol message as the data request signal. The protocol interface module 24 uses a Type-C interface for external physical connectivity and can also choose other physical interface based on requirements. The outdoor electrical appliance 2 communicates with the programmable power supply 1 via the protocol interface module 24, negotiating and receiving the energy of corresponding power signal.

As shown in FIG. 2, a programming and protection detection module 22 includes a sampling circuit 221 for obtaining a sampling circuit signal, a load protection switch 222 and a fuse 223. The sampling circuit 221 is connected to one end of the load protection switch 222, the other end of the load protection switch 222 is connected to one end of the fuse 223, and the other end of the fuse 223 is connected to the electrical load 21. The sampling circuit signal includes a voltage signal and a current signal.

Converting the sampling circuit signal into the data request signal includes:
The sampling circuit 221 samples the circuit through the electrical load 21 to obtain the voltage signal and current signal, calculates an error value between these signals and preset target parameters in the microcontroller 25, obtains an error value result, and the microcontroller 25 outputs a control adjustment signal to the protocol interface module 24 based on the error value result. The protocol interface module 24 uses the PD communication protocol converter 26 to convert the control adjustment signal into a PD protocol message readable by the programmable power supply 1, using the PD protocol message as the data request signal to be transmitted to the programmable power supply 1 via the physical connection cable. The programmable power supply 1 receives the data request signal and outputs a target voltage and current to the outdoor electrical appliance 2.

When the power of the electrical load 21 is high, a high-power channel is used to connect to the programming and protection detection module 22. The programming and protection detection module 22 assumes the programming function of the programmable power supply 1, formulating a real-time current and voltage request needed according to the electrical load 21. The programming and protection detection module 22, connecting to the microcontroller 25, includes the sampling circuit 221, the load protection switch 222 and the fuse 223, wherein the sampling circuit 221 samples and obtains the voltage and current signal passing through the electrical load 21, calculates an error value between these signals and the preset target parameters in the microcontroller 25, obtains an error value result. The microcontroller 25 outputs a control adjustment signal to the protocol interface module 24 based on the error value result. The protocol interface module 24 uses the PD communication protocol converter 26 to convert the control adjustment signal into a PD protocol message readable by the programmable power supply 1, using the PD protocol message as the data request signal to be transmitted to the programmable power supply 1 via the physical connection cable, and serving to protect the circuit and achieve control applications for the outdoor electrical appliance 2.

When the power of the electrical load 21 is low, a low-power channel is applied to connect to the programmable power supply 1 to avoid a slow response when the high-power channel is adjusted through the microcontroller 25 to collect feedback and to avoid a lack of precision because of the low power conversion module 23. Hence, when precise control of low power is required at the load end of the outdoor electrical appliance 2, it is necessary to switch to the low-power channel. The low power conversion module 23 is used to achieve high-precision control of voltage and current according to the actual need of the electrical appliance 2, thereby achieving precise constant temperature, insulation, constant speed, constant pressure and other targeted functions of the appliance.

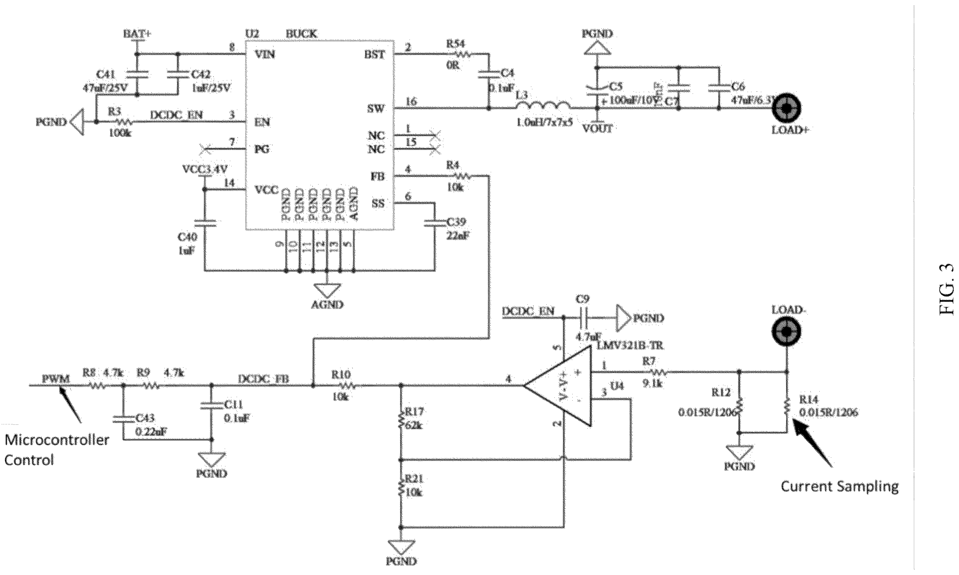

It should be particularly noted that the programmable power supply 1 includes steps such as: sampling by the microcontroller 25 - error calculation - sending a control adjustment signal to the protocol interface module 24 - the programmable power supply 1 outputs the corresponding targeted voltage and targeted current according to a new request, thereby occurring feedback lag easily. In some special use scenarios (such as balance constant speed of motor, constant temperature of heating equipment, insulation, voltage limitation at output end and so on), rapid response is required to reduce regulatory disturbances and strictly limit output voltage. The low power conversion module 23 is equipped with a low-power DCDC chip, which can be switched to and adjusted on the low-power channel connected to the low-power DCDC chip. The low-power DCDC chip, whose adjustment circuit is shown in FIG. 3, is configured to connect a battery in the circuit for charging and limiting the output current and voltage after the battery is fully charged, thereby achieving a precise adjustment of the circuit output. The electrical load 21 inside the outdoor electrical appliance 2 is actually an internal battery.

In addition, during the adjustment process of the programmable power supply 1, once the charging cable is shaken, the output power will fluctuate. Therefore, in scenarios where strict restriction of constant temperature and insulation is required, the low-power DCDC chip is directly used to do current limiting regulation, then combined with the sampling circuit 221 used to obtain temperature, voltage, current, and speed in the circuit of the outdoor electrical appliance 2, and the microcontroller 25 sends a PWM signal to the low-power DCDC chip directly for adjustment, thereby obtaining a more continuous and rapid response power regulation, so that the overall balance effect and response speed are better.

### Embodiment 3

The electrical load 21 is an energy-consuming component that realizes functions. The outdoor electrical appliance 2 equipping with the electrical load 21 causes that the voltage is too low and the current is too high, exceeding a USB PD protocol standard definition, which can lead to low overall work efficiency and mismatched load when passing through. For example, the minimum voltage of a USB cable is 5V, and a load below 5V cannot be controlled by PPS pass-through. The USB PD protocol standard refers to the fact that USB PD cables are divided into two types. One is a cable without Emark chips which can only transmit a maximum of 3A current, and the other one is a cable with Emark chips which can be expanded to 5A current. The chip will provide overcurrent protection if the current exceeds, therefore, all loads on the USB power cable need to be within these two current parameters to work normally. In addition, the standard current of the PD protocol standard is within 5A. Loads exceeding 5A are not matched with the PD protocol standard power pass-through and need to be matched and converted by a private protocol or an added DC-DC circuit. The voltage and current types supplied by the programmable power supply 1 itself, as well as the power supply capacity of the USB cable, also vary with different products. Therefore, it is necessary to specially match the impedance of the electrical load 21 to ensure that the outdoor electrical appliance 2 operates under the most efficient conditions.

The impedance parameter of the electrical load 21 is a set value to achieve impedance matching between the outdoor electrical appliance 2 and the programmable power supply 1; by customizing the impedance parameter of the electrical load 21 through impedance matching methods, it is ensured that when the outdoor electrical appliance 2 is connected to the programmable power supply 1, a working current of the outdoor electrical appliance 2 complies with a preset charging protocol standard, that is, the USB PD protocol standard. The impedance matching method includes customizing component materials, components in series and parallel, or a voltage boosting and reducing of charge pump 3, etc.; by using the electrical load 21 with customized impedance parameter, the working current of the outdoor electrical appliance 2 matches the USB PD protocol standard definition, ensuring that the conversion efficiency between the outdoor electrical appliance 2 carrying the load and the programmable power supply 1 is in a high-efficiency range.

If the outdoor electrical appliance 2 is an outdoor heating appliance, a general standard 140W electric heating wire is used as the electrical load 21 of the outdoor electrical appliance 2. A 5.6Q heating wire is customized to achieve an outdoor heater working voltage of about 28V and a current of 5A, which matches the USB PD protocol standard definition and reduces the energy loss of the physical connection cable, ensuring the efficient operation of the outdoor electrical appliance 2. Under the condition of fast heating, the heating wire works under high load. At this time, the high-power channel of the outdoor electrical appliance 2 is used, and the programming and protection detection module 22 negotiates with the programmable power supply 1 through the protocol interface module 24. At this time, the heating module operates at full power and the temperature rises. When it is necessary to precisely adjust the load of the heating wire, such as approaching and maintaining the target temperature point, or in the insulation scene, a fluctuation range of the high-power channel is too large to precisely adjust the power of the heating wire. At this time, it can be done that switching to the low-power channel and achieving precise PID algorithm temperature control or simple temperature control through the low-power conversion module 23. At present, there are no dedicated standard heating wire parts on the market for USB direct drive control. Most parts are completed through DC-DC power control. For high-power heating products, a few groups of fixed impedance electric heating wires need to be customized for direct high-power control of the programmable power supply 1, whose specific parameters are as follows: 4Ω (20V-5A), 5.652 (28V-5A), 6.2Ω (11-1.8A), 6.6Q (20V-3A), 7.2Ω (36V-5A), 9.6Ω (48V-5A). The above fixed parameters will be adjusted up and down by 10% according to the actual product situation.

If the outdoor electrical appliance 2 is a lighting appliance, for USB direct drive, a LED 4 core is connected in series by using PCB components in series or semiconductor packaging, ultimately achieving direct drive of high power from the programmable power supply 1. For example, in the scenario of outdoor lighting fixtures using LED 4 beads, if a programmable power supply 1 has a maximum supply of only 15V/3A and a USB cable can only operate at a maximum of 3A, choose to connect four LED 4 beads with a 3A current in series at the load end, and when operating at full power, the voltage of the LED 4 is approximately within 14V and the current is 3A, ultimately achieving optimal impedance matching between the input and output of the circuit. In situations with many people outdoors, the LED 4 is operated at full power, and the power supply is directly supplied to LED4 through the high-power channel. At this time, there is no power conversion loss, the power supply efficiency is high, and there is no power conversion bottleneck. In situations with few people, or even in the middle of the night when a moonlight gear is turned on to find something, the low-power channel can be switched to, achieving a constant low-power output and enhancing the user experience. It can be understood that the aforementioned moonlight gear is a preset low output lumen gear of the LED 4.

If the outdoor electrical appliance 2 is an outdoor high-power fan, the key components include brushed motors and brushless motors.

For brushless motors, a voltage change range of the load is relatively large at low and high speeds. At this time, the USB supply voltage can be adjusted by the programming and protection detection module 22 to be as close as possible to the target voltage point, thereby improving the conversion efficiency of the brushless motor's electrical bridge. For brushed motors, it is even possible to adjust the speed directly through the high-power channel without the need for a speed control circuit inside the fan. For motor products, for USB direct drive, customize the motor windings to ensure that the motor operates at the most efficient efficiency at 11V, 20V, 28V, 36V, and 48V.

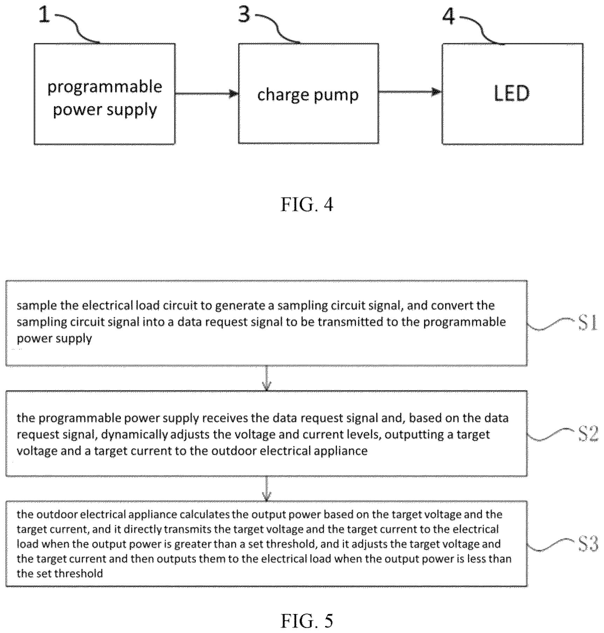

For a method of voltage boosting and reducing of charge pump 3, refer to FIG. 4, the charge pump 3 is set on the electrical load 21, specifically placed inside the end of the electrical load 21, used for boosting and reducing the voltage and current of the high-power channel. The application of the charge pump 3 achieves lossless voltage transformation. Since a USB PD power cable has regulations on the size of the current, the maximum current for a cable without an Emark chip is 3A, and the maximum current for a cable with an Emark chip should not exceed 5A. If a direct control want to be achieved on the USB power cable, while also complying with the USB current limit standard and reaching the target power, it is necessary to design an impedance matching at the load end, thereby achieving direct driving by the programmable power supply 1. The conversion efficiency of the voltage boosting and reducing of charge pump 3 is as high as 98%, with almost no loss, and the transformation process does not require inductors, and the circuit volume is also relatively small. For example, the driving voltage for a LED 4 is 3.6V/10A, then if the programmable power supply 1 is directly conducted, on the one hand, the voltage is low and the current is large, resulting in significant cable loss, and on the other hand, the current does not comply with the USB PD standard. In this situation, a voltage boosting and reducing of charge pump 3 can be used. By outputting a 7.2V/5A USB power supply through the programmable power supply 1, and then after the voltage boosting and reducing of charge pump 3, it becomes a 3.6V directly outputting 10A of current to the LED 4. The entire conversion process has no switch loss and inductor DCR (direct current resistance) loss and has high efficiency, and the circuit has a small volume.

### Embodiment 4

As shown in FIG. 5, this embodiment proposes an outdoor electrical system based on a programmable power supply, which includes the following steps:
step 1, sampling circuit of the electrical load 21 to generate a sampling circuit signal, and converting the sampling circuit signal into a data request signal to be transmitted to the programmable power supply 1;
step 2, receiving the data request signal via the programmable power supply 1, dynamically adjusting the voltage and current levels based on the data request signal, and outputting a target voltage and a target current to an outdoor electrical appliance 2; and
step 3, calculating the output power based on the target voltage and the target current via the outdoor electrical appliance 2; when the output power is greater than a set threshold, directly transmitting the target voltage and the target current to the electrical load 21, and when the output power is less than the set threshold, adjusting the target voltage and the target current and then outputting them to the electrical load 21.

In this embodiment, when the output power from the programmable power source 1 to the electrical load 21 is greater than the set threshold, it is determined that the electrical load 21 requires high power consumption and the power supply output is directly output to the electrical load 21 through the set programming and protection detection module 22, which reduces power conversion losses. When the output power is less than the set threshold, it is determined that the electrical load 21 requires low power consumption and the power supply output is adjusted and then output to the electrical load 21 through the set low power conversion module 23. This approach realizes that when high power output is needed, the energy conversion is completed in one step within the programmable power source 1, without the need for a DC-DC conversion circuit in between, effectively reducing the number of energy conversions on the power consumption side, achieving the effect of reducing energy conversion loss, and enhancing the output conversion efficiency of the outdoor electrical system.

Apparently, the aforementioned embodiments of the present invention are provided solely for illustrating the examples of the present invention and should not be considered as limitation on the implementation of the invention. For ordinary skilled persons in this field, additional changes or modifications in different forms can be made based on the above description. It is neither necessary nor feasible to exhaustively enumerate all possible embodiments herein. Any modification, equivalent replacement, improvement, or the like made without departing from the spirit and principle of the present invention shall fall within the protection scope of claims of the present invention.

## Claims

1. An outdoor electrical system based on a programmable power supply, **characterized in that**, the system comprises:
a programmable power supply, configured to receive a data request signal from an outdoor electrical appliance, adjust an output power of the power supply according to the data request signal, and output the output power to the outdoor electrical appliance; and
the outdoor electrical appliance, configured to convert a sampling circuit signal of an electrical load into the data request signal and transmit the data request signal to the programmable power supply, and when the output power is greater than a set threshold, a built-in programming and protection detection module directly outputs the power supply to the electrical load, and when the output power is less than the set threshold, a built-in low power conversion module adjusts the power supply and outputs the power supply to the electrical load.

2. The outdoor electrical system based on a programmable power supply according to claim 1, wherein the programmable power supply is bidirectionally connected to the outdoor electrical appliance through a physical connection cable, and the programmable power supply is powered by a power supply of programmable type that supports a PD communication protocol.

3. The outdoor electrical system based on a programmable power supply according to claim 2, wherein the physical connection cable is a USB cable, compatible with the protocol between the programmable power supply and the outdoor electrical appliance.

4. The outdoor electrical system based on a programmable power supply according to claim 1, wherein the outdoor electrical appliance comprises a protocol interface module and a microcontroller, and the programmable power supply is bidirectionally connected to the protocol interface module, the protocol interface module is bidirectionally connected to the programming and protection detection module and the low power conversion module, the microcontroller is bidirectionally connected to the programming and protection detection module, the protocol interface module, the low power conversion module, and the electrical load, and the programming and protection detection module and the low power conversion module are respectively electrically connected to the electrical load.

5. The outdoor electrical system based on a programmable power supply according to claim 4, wherein the protocol interface module equips a PD communication protocol converter, which is used to convert the sampling circuit signal into a PD protocol message readable by the programmable power supply, and the PD protocol messages are referred to as the data request signal.

6. The outdoor electrical system based on a programmable power supply according to claims 4, wherein the programming and protection detection module comprises a sampling circuit for obtaining the sampling circuit signal, a load protection switch and a fuse, wherein the sampling circuit is connected to one end of the load protection switch, the other end of the load protection switch is connected to one end of the fuse, and the other end of the fuse is connected to the electrical load.

7. The outdoor electrical system based on a programmable power supply according to claim 6, wherein the sampling circuit signal comprises a voltage signal and a current signal.

8. The outdoor electrical system based on a programmable power supply according to claim 7, the process of converting the sampling circuit signal into the data request signal includes:
the sampling circuit samples the circuit through the electrical load to obtain the voltage signal and current signal, calculates an error value between these signals and preset target parameters in the microcontroller, obtains an error value result, and the microcontroller outputs a control adjustment signal to the protocol interface module based on the error value result; and the protocol interface module uses the PD communication protocol converter to convert the control adjustment signal into a PD protocol message readable by the programmable power supply, using the PD protocol message as the data request signal to be transmitted to the programmable power supply via the physical connection cable; and the programmable power supply receives the data request signal and outputs a target voltage and current to the outdoor electrical appliance.

9. The outdoor electrical system based on a programmable power supply according to any one of claim 1 to 8, wherein an impedance parameter of the electrical load is a set value, thereby achieving impedance matching between the outdoor electrical appliance and the programmable power supply.

10. An outdoor electrical method based on a programmable power supply, **characterized in that**, the method comprises the following steps:
step 1, sampling circuit of an electrical load to generate a sampling circuit signal, and converting the sampling circuit signal into a data request signal to be transmitted to the programmable power supply;
step 2, receiving the data request signal via the programmable power supply , dynamically adjusting voltage and current levels based on the data request signal, and outputting a target voltage and a target current to an outdoor electrical appliance; and
step 3, calculating an output power based on the target voltage and the target current via the outdoor electrical appliance, and directly transmitting the target voltage and the target current to the electrical load when the output power is greater than a set threshold, and adjusting the target voltage and the target current and then outputting them to the electrical load when the output power is less than the set threshold.
